(19) Europäisches Patentamt
European Patent Office
Office européen des brevets

(11) **EP 3 709 525 A1**

(12) **DEMANDE DE BREVET EUROPEEN**

(43) Date de publication:
**16.09.2020 Bulletin 2020/38**

(51) Int Cl.:
*H04B 5/00* (2006.01)    *H01Q 21/24* (2006.01)
*G06K 19/067* (2006.01)    *G01S 13/88* (2006.01)

(21) Numéro de dépôt: **19305301.4**

(22) Date de dépôt: **13.03.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeurs:
• **MGI Digital Technology**
**94260 Fresnes (FR)**
• **Inkjet Engine Technology**
**92190 Meudon (FR)**

(72) Inventeurs:
• **ABERGEL, Edmond**
**75012 Paris (FR)**
• **GAUTIER LE BOULCH, Louis**
**92190 Meudon (FR)**

(74) Mandataire: **De Kezel, Eric**
**Mathisen & Macara LLP**
**Communications House**
**South Street**
**Staines-upon-Thames**
**Middlesex, TW18 4PR (GB)**

(54) **PROCEDE DE DETECTION DE DISPOSITIFS D'IDENTIFICATION PAR FREQUENCE RADIO (<<RFID>>) SANS PUCE**

(57) La présente invention concerne un procédé de détection de dispositifs d'identification par fréquence radio (« RFID ») sans puce personnalisés, en particulier la détection d'étiquettes RFID sans puce personnalisées, aussi appelées « chip-less RFID tags ». La présente invention concerne également les dispositifs et étiquettes utilisables dans le procédé revendiqué.

Tag comportant 8 résonateurs

dont le spectrogramme obtenu après mesure est donné sur la Figure 1

Figure 2

**EP 3 709 525 A1**

**Description**

La présente invention concerne un procédé de détection de dispositifs d'identification par fréquence radio (« RFID ») sans puce personnalisés, en particulier la détection d'étiquettes RFID sans puce personnalisées, aussi appelées « chip-less RFID tags » ou « code-barres RF ». La présente invention concerne également les dispositifs et étiquettes utilisables dans le procédé revendiqué.

Par « dispositif » il faut comprendre un emballage, un document, une étiquette, notamment un document de sécurité ainsi qu'éventuellement tout support sur lequel le marquage de l'identification par RFID sans puce peut être réalisé.

**Exposé de l'art antérieur**

Les systèmes de transmission de données utilisant la technologie d'identification par fréquence radio sont couramment utilisés pour identifier tous types d'objets et d'êtres vivants (par exemple un animal ou un humain) porteurs d'un dispositif (étiquette) adapté. La technologie RFID est devenue au cours des dernières décennies de plus en plus répandue en tant que dispositif de stockage et de transmission d'informations.

Cette technologie RFID utilise une radio-étiquette, également dénommée transpondeur (de l'anglais « transponder », par contraction des mots « transmitter » et « responder »), qui est placée sur un objet, et un lecteur, également dénommé interrogateur, pour lire et identifier la radio-étiquette. Les technologies RFID sont généralement classées en catégories utilisant des radio-étiquettes «actives» ou «passives». Les radio-étiquettes actives disposent d'une source d'énergie locale (telle qu'une batterie) grâce à laquelle elles envoient un signal au lecteur ; elles sont ainsi généralement caractérisées par une portée de signal émis relativement longue. En revanche, les radio-étiquettes passives ne disposent pas de source d'alimentation interne car leur énergie d'émission de signal provient du lecteur lui-même, et en particulier de la réception du signal émis par le lecteur ; ainsi, les radio-étiquettes passives ont une portée de signal beaucoup plus faible, en générale inférieure à 8 mètres.

D'un point de vue pratique, la technologie RFID utilise des fréquences radio qui ont des caractéristiques de pénétration du matériau beaucoup plus élevées que les signaux optiques. Ainsi, en comparaison avec les étiquettes codes à barres, la technologie RFID permettra une utilisation dans des conditions environnementales bien plus hostiles ; par exemple, les étiquettes RFID peuvent être lues à travers toute sorte de matière telle que le papier, le carton, le bois, la peinture, l'eau, la saleté, la poussière, le corps animal ou humain, le béton ou encore à travers l'article étiqueté lui-même ou son emballage. Ceci a ouvert aux étiquettes RFID une large gamme d'applications parmi lesquelles nous citerons à titre illustratif, l'identification des biens et des personnes, en particulier des emballages, des voitures (parking, péages, ...), la gestion des inventaires, les cartes d'accès électroniques, sans oublier tous les documents de sécurité tels que par exemple un moyen de paiement, tel qu'un billet de banque, un chèque ou un ticket restaurant, un document d'identité, tel qu'une carte d'identité, un visa, un passeport ou un permis de conduire, un ticket de loterie, un titre de transport ou encore un ticket d'entrée à des manifestations culturelles ou sportives.

Il existe principalement deux types d'étiquettes RFID, les étiquettes comprenant un circuit électronique intégré, dites étiquettes à puce (électronique), et les étiquettes ne comprenant pas de circuit électronique intégré, généralement désignées dans la technique par les termes anglais « chip-less RFID tags » - étiquettes RFID sans puce.

Les étiquettes RFID à puce (actives ou passives) comprennent généralement une antenne, un circuit électronique, une mémoire pour stocker un code d'identification. Le circuit électronique permet notamment de recevoir le signal émis par la borne de lecture et d'émettre en réponse, dans une bande de fréquences déterminée, un signal modulé contenant le code d'identification stocké dans la mémoire. Pour les étiquettes RFID à puce passives, une partie de l'énergie portée par les ondes radio émises par la borne de lecture sert à alimenter électriquement la puce.

Du fait de la présence de circuits électroniques dans les étiquettes RFID à puce, ces étiquettes ont un coût de revient non négligeable. C'est notamment pour réduire ce coût de revient qu'on a proposé de réaliser des étiquettes sans puce. Ce type d'étiquette RFID sans puce ne nécessite donc ni circuit intégré, ni composants électroniques discrets, tels que par exemple un transistor et/ou une bobine et/ou une capacité et/ou une antenne; c'est leur caractéristique géométrique conductrice qui engendre un comportement spécifique, notamment de type résonateur. Cette caractéristique de résonance à fréquence donnée permet d'imprimer des étiquettes RFID sans puce directement sur un substrat à des coûts inférieurs à ceux des étiquettes RFID traditionnelles avec puce.

D'autres challenges doivent également être adressés pour fiabiliser la technologie des étiquettes RFID sans puce personnalisées et, en particulier fiabiliser et améliorer la détection des étiquettes dans des environnements différents. En effet, il est inutile d'essayer d'augmenter la quantité d'informations qu'une étiquette sans puce peut contenir si son identification ne peut pas être détectée/lue correctement dans des environnements réels et sans avoir à utiliser des techniques de calibration complexe pour extraire l'identifiant du tag. Ce challenge de détection est encore plus exacerbé lorsqu'il s'agit de dispositifs d'identification par fréquence radio sans puce personnalisés sans plan de masse comme expliqué ci-dessous dans la description.

La majorité des techniques de détection utilisées à ce jour pour les étiquettes RFID sans puce requièrent d'effectuer plusieurs mesures, à savoir une mesure de l'étiquette dans son environnement (par exemple sur son support) ainsi qu'une mesure (sans étiquette) du dit environnement (par exemple, du support sur lequel elle se trouve). Après cela, l'identifiant de l'étiquette est obtenu en faisant la différence entre la mesure de l'environnement seul et la mesure avec l'étiquette. Ce traitement est nécessaire car, dans la technologie RFID sans puce, la surface équivalente radar (SER ou Radar cross-section RCS en anglais) des étiquettes est très petite comparée à la SER de l'environnement. Malgré ce procédé, dès lors qu'un objet a été ajouté dans l'environnement de mesure du tag sans être initialement présent lors de la mesure de l'environnement (c'est à dire sans la présence du tag), la détection de l'identifiant du tag peut se révéler être impossible à obtenir. Ce comportement très limitant pour la technologie RFID sans puce se retrouve également lorsque les objets sont mobiles autour du tag, là encore la mesure de l'environnement seul ne permettra pas à prendre en compte correctement l'influence de l'objet perturbateur dans la mesure où cette influence sera différente lors de la mesure avec le tag de celle sans le tag (le champ rétrodiffusé par de l'objet qui est mesuré par le lecteur et lié entre autre à la position de l'objet par rapport à l'antenne du lecteur).

Une nouvelle technique permettant de pallier ces inconvénients a été développée récemment. Elle consiste à combiner l'utilisation d'étiquettes dépolarisantes robustes avec une approche de transformation du signal rétrodiffusé au moyen d'une méthode de type « STFT » [short-time Fourier transform] ; cela permet de détecter/identifier l'étiquette sans aucune mesure d'étalonnage. Ceci est rendu possible car les étiquettes sans puce dépolarisantes dans le domaine fréquentiel sont des structures intrinsèquement résonantes, conçues pour avoir un facteur de qualité élevé afin de présenter une SER élevée. C'est pourquoi leur facteur de qualité est supérieur à celui provenant des objets environnants. Ainsi, les étiquettes vont restituer l'énergie emmagasinée pendant un certain temps (en lien avec le facteur de qualité du ou des résonateurs présents sur l'étiquette) ; l'énergie correspondant à la fréquence de leurs résonances va permettre une identification des étiquettes. La discrimination basée sur cette détermination a été décrite dans l'article intitulé « Temporal Separation Detection for Chipless Depolarizing Frequency-coded RFID » (Angle Ramos, Etienne Perret, Olivier Rance, Smail Tedjini, Antonio Lazaro, and David Girbau ; IEEE Transactions on microwave theory and techniques, vol. 64, No. 7, July 2016, page- 2326-2337). Bien que la technique d'exploitation du signal rétrodiffusé selon « Ramos » constitue déjà une avancée dans le domaine des étiquettes sans puce et de leur identification, il n'en demeure pas moins que l'on recherche toujours des améliorations permettant de s'affranchir des erreurs de détection dues au bruit de fond de l'environnement, de la présence d'objet mobile se déplaçant autour du tag, tout en maximisant l'information exploitable par détection/identification de l'étiquette.

**Invention**

Ainsi, la présente invention apporte une solution prometteuse à cette problématique en proposant un procédé de détection de dispositifs d'identification par fréquence radio (« RFID ») sans puce personnalisés, en particulier la détection d'étiquettes RFID sans puce personnalisées ; ce qui a également permis de développer une gamme nouvelle de dispositifs et étiquettes d'identification par fréquence radio (« RFID ») sans puce personnalisés utilisables dans le procédé revendiqué, les dits dispositifs/étiquettes présentant des propriétés physiques particulièrement adaptées au mode de détection revendiqué.

En particulier, la présente invention concerne un procédé de détection d'étiquette d'identification par fréquence radio (tag RFID) sans puce personnalisé caractérisé en ce que le procédé de détection comprend

- la communication entre un lecteur et le tag dans une bande de fréquences ultra large (ultra large bande ULB) caractérisée par une bande passante supérieure ou égale à 500 MHz, de préférence comprise entre 3,1 et 10,6 GHz,
- la communication comprenant l'émission d'un signal par le lecteur vers le tag et la rétrodiffusion d'un signal par le tag, et
- l'identification du tag par extraction du signal rétrodiffusé en utilisant une transformation temps-fréquence [de préférence une transformation de type STFT (short-time Fourier transform)] comprenant l'établissement de spectrogramme temps-fréquence [de préférence STFT], la dite identification étant caractérisée en ce qu'elle ne comprend pas d'étape de calcul de moyenne du spectrogramme temps-fréquence [de préférence STFT].

Comme expliqué dans la description qui suit, cette invention a également permis de développer des familles de tags nouvelles ainsi que des nouvelles méthodes d'identification de ces familles.
Dans un mode d'exécution particulier et préféré selon la présente invention, le tag RFID sans puce personnalisé pouvant être utilisé dans le procédé de détection et/ou l'utilisation revendiqués possède les caractéristiques suivantes

- Un motif conducteur ou un ensemble de motifs conducteur caractérisant sa géométrie, avec de préférence au moins un ou plusieurs ou tous les motifs asymétriques,
- Caractérisé par son identifiant qui comprend au moins une fréquence de résonance $fri$ et, de préférence, au moins un facteur de qualité Qi,
◦ Résonant dans une bande de fréquences ultra large (ULB) caractérisée par une bande passante supérieure ou égale à 500 MHz, de préférence comprise entre 3,1 et 10,6 GHz,
◦ De préférence sans plan de masse, et
◦ De préférence dépolarisant.

Dans un mode d'exécution particulier, la présente invention concerne également l'utilisation des tags revendiqués dans une méthode d'identification et de discrimination des tags qui prend en compte la fréquence de résonance et/ou le facteur de qualité des dits tags. Ainsi, la présente invention concerne également l'utilisation de tag RFID sans puce personnalisé dans un procédé de détection caractérisé en ce que le procédé permet la discrimination de deux tags successifs au moyen de la fréquence de résonance et/ou du facteur de qualité des dits tags, de préférence au moyen de leur couple fréquence de résonance *fri* et facteur de qualité Qi.

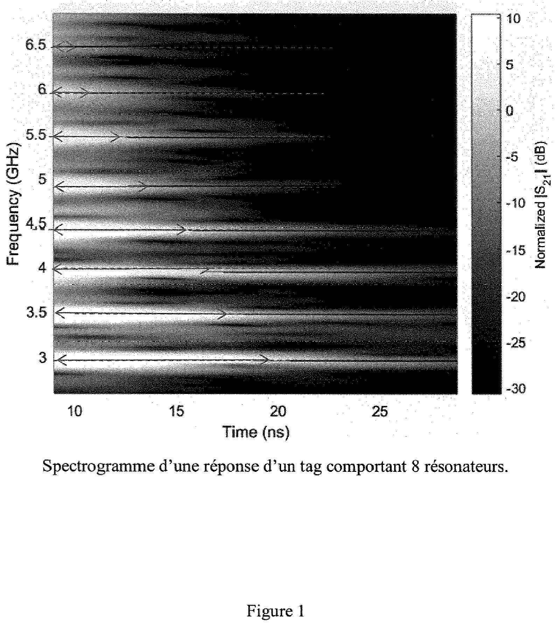

La Demanderesse est parvenue à développer une technologie de détection permettant de s'affranchir de l'étape de calcul de moyenne du spectrogramme temps-fréquence. Ceci est d'autant plus inattendu à la lecture de l'art antérieur qui considère que cette étape constitue une étape essentielle de tout procédé de détection de tag. En effet le traitement basé sur le moyennage du spectrogramme a l'avantage indéniable de pouvoir réaliser un fenêtrage fréquentiel (choix de la bande de fréquence pour le calcul du spectrogramme) puis un fenêtrage temporel à la lecture du spectrogramme. Ces fenêtrages fréquentiel mais surtout temporel permettent d'isoler de l'environnement le signal rétrodiffusé du tag et donc de pouvoir remonter à son identifiant (« ID »), plus particulièrement à sa (ou ses) fréquence(s) de résonance. Le fait de réaliser un calcul de moyenne du spectrogramme comme décrit dans l'article de Ramos précité, revient à transformer un signal en deux dimensions, celui du spectrogramme STFT en un signal en une dimension (1D) qui a l'avantage de pouvoir être utilisé très simplement par la suite (on remonte à l'ID du tag en repérant sur ce signal 1D les maximums de la courbe). De la même manière, ce procédé a l'inconvénient majeur de perdre une grande partie de l'information qui était disponible sur le spectrogramme original (données 2D) avant l'opération du moyennage. En effet, on perd par exemple les formes géométriques 2D qui étaient présentes et qui correspondaient au signal présent sur le tag. Une extraction de l'ID du tag directement à partir du signal 2D du spectrogramme constitue une avancée discriminante dans la lecture d'un tag chipless selon la présente invention. En effet, par ce procédé revendiqué, il est montré qu'il est possible de diminuer de manière drastique le taux de faux positif, c'est-à-dire la détection d'un ID qui ne correspond pas à celui du tag lu. Cette erreur est liée à un faible rapport signal à bruit, ou à la présence d'un object mobile autour du tag, qui dans le cas du moyennage va conduire à l'apparition de pic à des fréquences qui sont différentes des fréquences de résonance du tag. On montre qu'un traitement en 2D du spectrogramme permet d'éliminer ces erreurs soit en arrivant à détecter le bon ID, ou soit si le rapport signal à bruit est véritablement trop faible, de reconnaitre cette lecture comme non exploitable et donc de ne pas la traduire en un faux ID. Une manière simple de le comprendre, est de reconnaitre qu'un signal fortement bruité, va conduire après l'étape de moyennage à la présence d'un très grand nombre de pics, et donc la présence de pics dans les bandes de fréquence de recherche pour l'attribution d'un code. Ces pics n'étant pas liés à la géométrie du tag, le code extrait est erroné. La lecture du spectrogramme est-elle totalement différente, et fortement moins trompeuse dans la mesure où le bruit va pouvoir être clairement différencié du signal lié à la résonance du tag comme expliqué dans le détail ci-après. Ceci est lié au fait qu'une résonance liée au tag va avoir une forme 2D très reconnaissable comme le montre la Figure 1 ; cette Figure 1, qui représente un spectrogramme d'une réponse d'un tag comportant 8 résonateurs, est expliquée dans le détail ci-dessous.

Dans un mode d'exécution particulier, la présente invention concerne un procédé de détection d'étiquette d'identification par fréquence radio (tag RFID) sans puce personnalisé caractérisé en ce que le procédé de détection comprend

- la communication entre un lecteur et le tag dans une bande de fréquences ultra large caractérisée par une bande passante supérieure ou égale à 500 MHz, de préférence comprise entre 3,1 et 10,6 GHz,
- la communication comprenant l'émission d'un signal par le lecteur vers le tag et la rétrodiffusion d'un signal par le tag, et
- l'identification du tag par extraction du signal rétrodiffusé en utilisant une transformation temps-fréquence comprenant l'établissement de spectrogramme temps-fréquence et la détermination d'au moins une fréquence de résonance et, de préférence, au moins un facteur de qualité correspondant à cette fréquence, du tag à partir du dit spectrogramme temps-fréquence sans devoir effectuer d'étape de calcul de moyenne du spectrogramme temps-fréquence.

Toute transformation temps-fréquence permettant l'établissement d'un spectrogramme correspondant pourra avantageusement être utilisée dans le cadre de la présente invention. A titre illustratif, seront cités les transformations de type STFT « transformée de Fourier à court-terme », décomposition de Gabor, et/ou transformée en ondelettes.

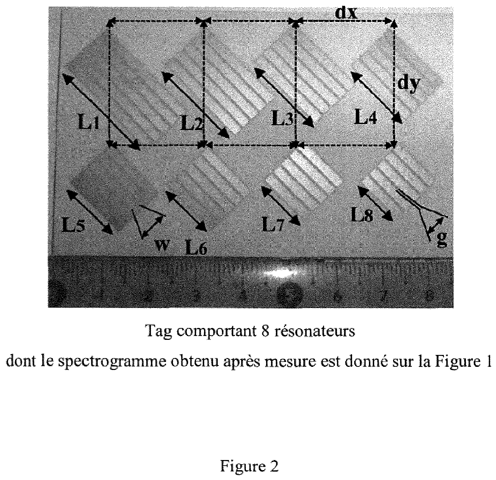

A titre illustratif, un exemple de spectrogramme STFT (représentation 2D) extrait à partir de la réponse rétrodiffusée (mesure) d'un tag chipless en lien avec la présente invention est donné sur la Figure 1. Le tag utilisé est présenté sur la Figure 2 ; on peut y apercevoir un tag caractérisé par une géométrie comportant 8 motifs similaires (symétriques dans cet exemple). La mesure a été faite en chambre anéchoïque. On peut voir à la Figure 1 des bandes horizontales de différentes durées (qu'on peut déterminer précisément en se référence à l'axe des abscisses noté Time en ns sur la figure). Chaque bande est caractéristique d'une résonance du tag et donc d'un des 8 résonateurs présents sur le tag.

On voit ainsi clairement sur la Figure 1 que le tag contient 8 fréquences de résonance (8 bandes horizontales, qui correspondent physiquement à la présence de 8 motifs résonants correspondant respectivement à chacun des 8 motifs comme on peut les voir Figure 2). La position selon l'axe des ordonnées (Fréquence (en GHz)) de ces bandes va permettre de déterminer la fréquence de résonance de chaque résonateur. La présente invention a pour but de présenter une méthode pour venir déterminer précisément ces fréquences de résonance, notamment lorsque la mesure est effectuée dans un environnement très bruité. On peut comprendre à la lecture de la Figure 1, que ces fréquences vont correspondre - par rapport au colorbar - à la partie où le signal est maximum en amplitude à savoir sur la Figure, les zones en blanc qui deviennent gris puis noir lorsque le signal s'atténue. On note qu'un trait pointillé horizontal a été ajouté sur le spectrogramme afin de faire clairement apparaitre la fréquence que l'on peut extraire en mettant en oeuvre la présente invention. La durée (indiquée par l'axe des abscisses) de ces mêmes parties (indiquées par les flèches sur la Figure 1) est également un paramètre très important pour lire un tag chipless en lien avec un mode d'exécution particulier selon la présente invention (codage en fréquence et facteur de qualité). On va chercher à extraire cette information en utilisant le dit spectrogramme pour en extraire des valeurs de facteur de qualité (deuxième grandeur intrinsèque aux résonateurs). On voit sur la Figure 1 pour le cas du tag lu [tag contenant 8 résonateurs identiques avec simplement une diminution de la longueur des bandes (notées Li sur la Figure 2)] ces durées caractéristiques indiquées par des flèches.

L'invention concerne ainsi dans ce mode particulier l'introduction d'une méthode fiable pour détecter à la fois les fréquences de résonances du tag ainsi que le facteur de qualité associé, ceci en utilisant le spectrogramme (représentation temps / fréquence - 2D des résultats) - et ceci sans devoir effectuer d'étape de calcul de moyenne du spectrogramme STFT.

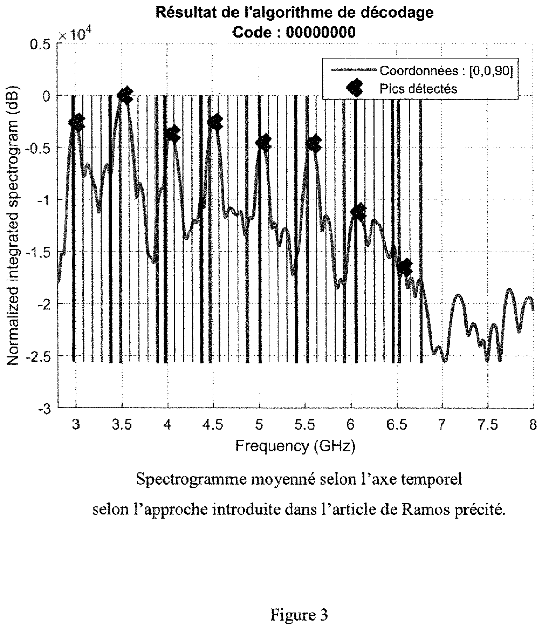

Dans l'article de Ramos précité on peut trouver une démarche visant à extraire la fréquence de résonance des tags. La méthode consiste à calculer le spectrogramme comme celui présenté Figure 1 ; puis à définir une zone rectangulaire (entre les temps $\tau 1$ $\tau 2$ et les fréquences F1 F2, où la définition de ces 4 paramètres est indiquée dans l'article de Ramos précité) sur laquelle une opération va être effectuée de manière à repasser d'une donnée 2D (spectrogramme) vers une donnée 1D (répartition du signal en fonction de la fréquence). En effet, la méthode consiste à effectuer la moyenne selon l'axe des abscisses (temps) pour se ramener à un signal qui est fonction uniquement de la fréquence. Le tel procédé a été mis en oeuvre à partir des données de la Figure 1 pour obtenir la Figure 3 ; cette Figure 3 représente donc un spectrogramme moyenné selon l'axe temporel selon l'approche introduite dans l'article de Ramos précité. On voit sur cette Figure l'apparition de pics en fréquence, dans cet exemple, ces pics correspondent aux fréquences de résonance des résonateurs. On note que le moyennage effectué sur le paramètre temporel (axes des abscisses entre $\tau 1$ $\tau 2$ - on notera Tavg= $\tau 2-\tau 1$ par la suite) fait que le résultat est devenu indépendant du temps.

L'intérêt de cette approche (passage données 2D vers 1D après moyennage) consiste à pouvoir appliquer un décodage classique à partir du résultat de la Figure 3 (courbe 1D). On entend par décodage classique ce qui est fait habituellement sur le signal fréquentiel (réponse du tag mesurés en fréquence par exemple avec un Analyseur de Réseau ou VNA en anglais) avant spectrogramme ; comme décrit dans l'article « Vena, Arnaud, Etienne Perret, and Smail Tedjini. "Chipless RFID tag using hybrid coding technique." IEEE Transactions on Microwave Theory and Techniques 59.12 (2011): 3356 ». Il suffit à partir des données de la Figure 3 de détecter les fréquences où le signal présente un maximum local dans la bande d'utilisation du tag (en particulier, dans l'exemple décrit ici, de 3 GHz à 6,8 GHz). En fonction de ces fréquences un identifiant du tag peut être déterminé. On voit sur la Figure 3 ; des traits verticaux (en gras, alternativement représentés en noir puis gris pour faciliter la lecture) qui délimitent des zones ou fenêtres. La première fenêtre est définie entre 3 GHz et 3,4 GHz (trais gras noir). Le tag est conçu pour présenter une résonance dans cette zone (un pic en fréquence dans la représentation de la Figure 3). On voit également sur la Figure 3 des sous-domaines à l'intérieur de cette fenêtre. Il y a en 4 dans cet exemple, chacun bénéficiant d'une bande fréquentielle de 100 MHz). C'est très exactement en fonction d'où se trouve le pic à l'intérieur de cette fenêtre que le code est déterminé. A titre d'exemple si le pic appartient au premier sous-domaine, on va pouvoir lui attribuer le code 00. S'il appartient au deuxième sous-domaine, on va lui attribuer le code 01, et ainsi de suite, 11 pour le $4^{ème}$ sous-domaine. On va répéter cette opération pour chacune des résonances du tag, et dans cet exemple, le code du tag pourra être présenté sur 7*2 bits (pour les 7 premières fenêtres contenant 4 sous bandes) plus 1 bit (pour le 8eme résonateur où la dernière fenêtre ne contient que deux sous-domaines). Le tag mesuré Figure 3 contient ainsi l'information : 00 00 00 00 00 00 00 0.

L'utilisation de cette approche a montré qu'en passant par le spectrogramme puis en définissant une zone de ce spectrogramme, le fenêtrage temporel et fréquentiel ainsi réalisé après avoir fait la moyenne, permettait de récupérer l'information du tag dans un environnement bruité et sans utiliser de mesure de référence. C'est pour ces raisons que cette approche est très performante et que la présente invention a pour but de l'améliorer. Malgré les avantages décrits précédemment, on peut noter la chose suivante : le décodage n'est pas réalisé sur le spectrogramme lui-même (données 2D) mais à l'issue de l'étape de moyennage réalisée à partir du spectrogramme. Or, le fait de passer du spectrogramme (2D) à un signal 1D se fait au détriment de la quantité d'information présente. En effet, le signal 1D contient bien moins d'informations que le signal 2D (perte notamment des informations temporelles du tag). Cette perte d'information est dommageable pour la détection du tag, où en environnement fortement bruité avec la présence d'objet mobile autour du tag, il est essentiel d'optimiser au mieux ce post traitement de manière à limiter au maximum les erreurs de décodage. Pour cette même raison, on perd entres autres l'information sur le facteur de qualité, autrement dit, il n'est plus possible d'extraire le facteur de qualité Q à partir de la courbe 1D.

C'est pour cela que la présente invention propose une nouvelle manière de procéder où les informations pertinentes pour le décodage de l'information du tag (fréquences de résonances et facteur de qualité) sont extraites directement à partir du spectrogramme.

Démarche introduite à titre illustratif pratique selon la présente invention :

Après avoir calculé le spectrogramme comme par exemple dans l'article de Ramos précité, l'idée est basée sur la reconnaissance des formes 2D présentes sur le spectrogramme, formes qui sont l'expression des résonances des résonateurs présents sur l'étiquette. En reconnaissant ces formes dans le spectrogramme, à savoir la position selon l'axe des ordonnées de la forme allongée horizontale ainsi que sa durée relativement à l'axe des abscisses, on est en mesure d'en déduire les fréquences de résonance (relativement à l'axe de ordonnées) ainsi que les facteurs de qualité (relativement à l'axe de abscisses) correspondants, chose qui n'avait jamais été réalisée à ce jour.

Les résonateurs utilisés dans le tag peuvent être simplement modélisés par un circuit électrique équivalent du deuxième ordre ayant pour fonction de transfert H l'équation suivante :

$$H(\omega) = \frac{\frac{2\sigma j\omega}{\omega_r^2}}{1+\frac{2\sigma j\omega}{\omega_r^2}+\left(\frac{j\omega}{\omega_r}\right)^2} \qquad (1)$$

où $\omega_r$ et $\sigma$ correspondent à la pulsation à la résonance et au facteur d'amortissement, respectivement, d'un pôle du second ordre, $\omega$ est la pulsation, j valeur imaginaire pure. La pulsation est directement reliée à la fréquence par l'expression $\omega$=2.$\pi$.f. On parlera donc indifféremment de la pulsation ou de la fréquence d'un signal.

Dans le cas idéal donné par l'équation (1), le facteur de qualité Q peut être extrait à partir de la courbe $|H(\omega)|$ (où | |désigne le module) en utilisant Q = $fr$ / (BW-3dB), où l'expression (BW-3dB) correspond à une bande passante BW (« band width ») de -3 dB autour de la fréquence de résonance. Le facteur d'amortissement $\sigma$ peut lui être calculé en utilisant l'équation (2) :

$$\sigma = \frac{\omega_r}{2Q} \qquad (2)$$

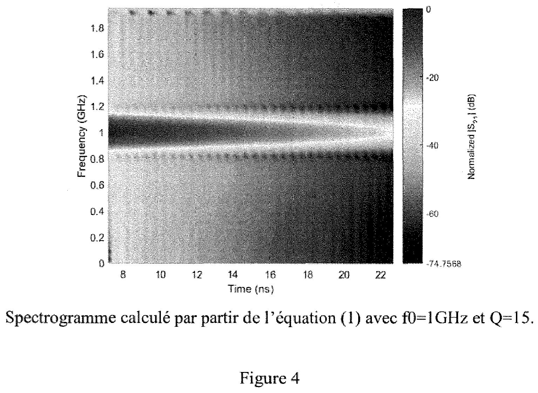

On parlera donc indifféremment du facteur d'amortissement ou du facteur de qualité du signal ; les deux grandeurs étant directement reliées entre elles à travers l'expression (2). Les tags sont conçus sur la base de simulations électromagnétiques. Ainsi nous connaissons précisément les intervalles des valeurs que vont prendre les fréquences de résonances $fr$ et les facteurs de qualité Q des tags produits. Par exemple on peut prendre une valeur possible de fréquence de résonance $fr$ et de facteur de qualité Q pour reconstituer un signal que pourrait avoir un de nos tags, à savoir ici le signal rétrodiffusé par une résonateur caractérisé par ($fr$, Q). En effet, ces valeurs à priori peuvent être utilisées pour tracer la courbe résultante de l'expression (1) en fonction de la pulsation $\omega$. De même, il est possible de calculer le spectrogramme correspondant au comportant de ce résonateur (ou du tag, dans ce cas on considère l'ensemble des résonateurs) toujours sur la base de l'équation (1). La Figure 4 donne le spectrogramme calculé à partir de l'équation (1) avec $fr$=1 GHz et Q=15. On retrouve bien sur la Figure 4 la forme horizontale caractéristique d'une résonance qui se retrouve 8 fois sur la Figure 1, où le spectrogramme d'un tag réel (issu d'un signal mesuré), contenant 8 résonateurs est présenté.

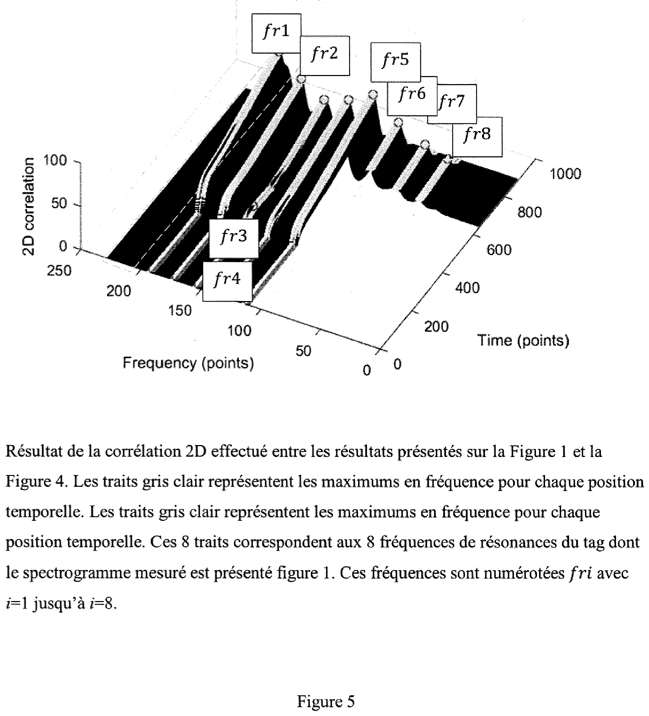

A partir de la Figure 4 (modèle d'un résonateur), il est possible de rechercher les similitudes de forme avec la Figure 1 (signal issu de la mesure d'un tag). Mathématiquement plusieurs solutions sont envisageables. Par exemple, cette opération peut être réalisée en faisant une corrélation 2D entre les données présentées sur les Figures 1 et 4. La Figure 5 affiche le résultat de cette opération de corrélation où on peut voir que les maximums de la courbe 2D ainsi obtenus (représentés par des traits gris clair) vont se retrouver pour les mêmes fréquences de résonances présentes sur la Figure 1, à savoir les fréquences de résonance du tag mesuré. On peut ici sur cette base, extraire très précisément les fréquences de résonance.

La Figure 5 représente donc le résultat de la corrélation 2D effectuée entre les résultats présentés sur la Figure 1 et la Figure 4. Les traits gris clair représentent les maximums en fréquence pour chaque position temporelle.

En plus de l'extraction des fréquences de résonance du tag $fr = fri$, il est possible d'extraire les valeurs des facteurs de qualité $Q=Q_i$ de chaque résonateur numéroté i pour prendre en compte la présence de plusieurs résonateurs dans le tag. En effet, pour extraire le facteur de qualité, l'opération de corrélation 2D est répétée en modifiant à chaque fois la valeur de $Q=Q_{i\_cal}$ dans l'équation (1). $Q_{i\_cal}$ étant différentes valeurs de facteur de qualité choisies dans l'intervalle des valeurs des facteurs de qualité des tag, c'est-à-dire valeurs définies lors de la conception du tag comme expliqué précédemment.

A l'issue de l'ensemble des calculs effectués, l'idée est de traiter le résultat (Figure 5) fréquences de résonance $fri$ par fréquence de résonance. Par exemple pour la fréquence de résonance la plus faible notée ici $fr1$ (conformément à la Figure 5), on s'intéressera à la trace gris claire ayant la coordonnée 180 sur l'axe notées « fréquence (point) » sur la figure 5. On identifiera la valeur $Q_{i\_cal}= Q_i$ pour laquelle, comparativement aux autres valeurs testés de facteur de qualité, on a le maximum du facteur de corrélation correspondant à la trace gris claire relative à $fr1$. Cette valeur de facteur de qualité $Q_{i\_cal}= Q_i$ ainsi extraite, n'est autre que la valeur du facteur de qualité du résonateur $i=1$, lié à la fréquence $fr1$.

On répète ce procédé pour les autres fréquences, à savoir pour les $fri,$ i=[2,8] dans l'exemple utilisé (tag caractérisé sur la Figure 1). On obtient ainsi les valeurs des facteurs de qualité $Q_i$ de chaque résonateur.

En conclusion, on peut ainsi extraire sur la base du spectrogramme directement les paramètres caractéristiques de chaque résonateur $i$ : la fréquence de résonance $fri$ et son facteur de qualité associé $Qi$.

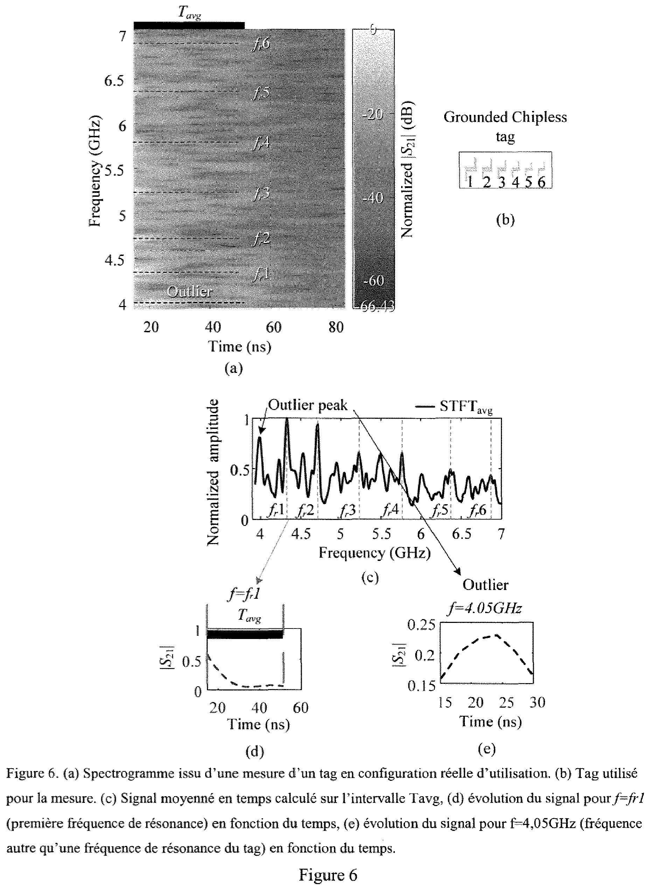

Les tests comparatifs effectués entre la méthode de référence dans l'article de «Ramos» précité et la méthode présentée ici montrent une fiabilité de détection en environnement réel bien supérieure pour la méthode introduite. On peut aisément le comprendre de la manière suivante. En environnement réel, le signal récupéré par le lecteur contient en plus du signal réfléchi par le tag, des signaux provenant de la réflexion sur d'autres objets (certains objets pouvant être mobile comme expliqué précédemment), ou encore simplement un signal issu du couplage entre l'émission et la réception. C'est pourquoi le signal récupéré dans pareil cas est significativement perturbé par ces signaux parasites ; phénomène inhérent à une utilisation pour une application réelle (et non en laboratoire). Le spectrogramme d'un signal mesuré dans le cadre d'une application réelle est présenté Figure 6. On peut voir la présence d'artefacts liés à la superposition de signaux autres que ceux liés au tag. Sur le spectrogramme moyenné (Figure 6b) on voit la présence de pics à des fréquences qui ne correspondent pas aux résonances du tag. Si sur ce signal, on applique la méthode de détection des pics (décrite précédemment) pour le décodage de l'information (ID du tag) comme décrit sur la Figure 3, l'identifiant obtenu sera incorrect ce qui implique que le tag ne pourra pas être lu correctement (l'ID renvoyé ne sera pas celui du tag). En revanche, lorsque l'on regarde l'approche par spectrogramme, comme le montre la Figure 6d, il va être possible de faire la différence entre un artefact de lecture (« outlier ») et une véritable résonance du tag. En effet, si on s'intéresse à la présence d'une zone allongée comportant un certain niveau de signal (voir par exemple la zone autour de 4,1 GHz notée *outlier* - zone apparemment très semblable à une résonance du tag, présentant également un pic sur la représentation moyennée - Figure 6b), il est intéressant de représenter pour la fréquence présentant un maximum local (ici 4,1 GHz), l'évolution du signal en fonction du temps. Pour un résonateur, il est attendu d'avoir une décroissance exponentielle à l'image de celle présentée Figure 6c ou encore décrite dans l'expression (1). Cette décroissance est en tout point identique à celle représentée sur la courbe Figure 4, lorsque l'on considère là aussi la fréquence correspondant au maximum local. En revanche la présence d'un artefact lié par exemple à un trop faible rapport signal sur bruit ou un objet mobile va lui être caractérisé par une toute autre variation, à l'image de celle présentée sur la Figure 6d. On voit à travers cet exemple (ce qui est la même chose pour les autres artefacts visibles au niveau de la Figure 6b, où des pics sont présents à des fréquences autres que celles des résonances) que le spectrogramme (signal 2D) contient d'avantage d'information, et se révèle être plus pertinent pour le décodage du tag. La méthode présentée ici basée sur la reconnaissance de forme (forme que prend une résonance dans une représentation en spectrogramme temps / fréquence) exploite ces informations. Elle va se révéler être très performante pour différencier les résonances d'artefacts liés à une lecture bruitée, lecture que l'on va retrouver pour une application réelle.

La Figure 6 illustre respectivement (a) le Spectrogramme issu d'une mesure d'un tag en configuration réelle d'utilisation. (b) le Tag utilisé pour la mesure. (c) le Signal moyenné en temps calculé sur l'intervalle Tavg, (d) l'évolution du signal pour f=fr1 (première fréquence de résonance) en fonction du temps, et (e) l'évolution du signal pour f=4,05GHz (fréquence autre qu'une fréquence de résonance du tag) en fonction du temps.

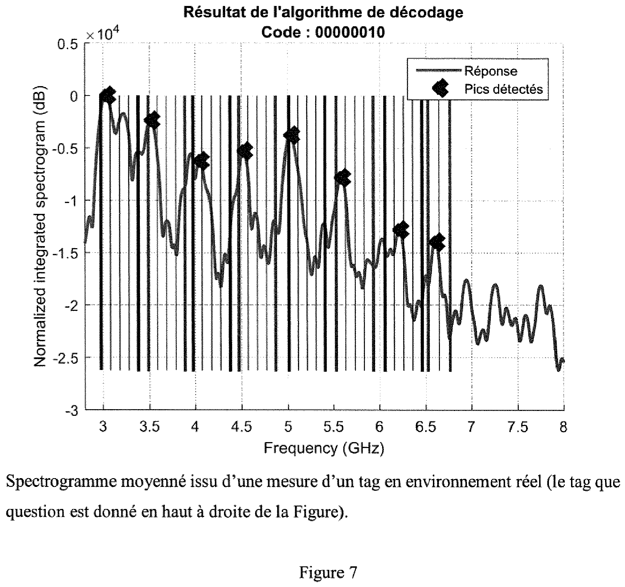

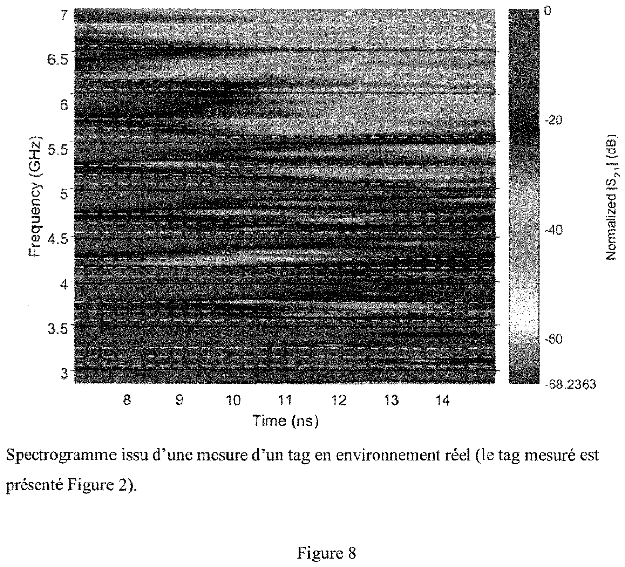

Nous présentons ici un dernier exemple révélateur de l'avantage à utiliser un décodage en utilisant le spectrogramme plutôt que le signal moyenné issu du spectrogramme de l'article de « Ramos » précité. Le tag présenté sur la Figure 2 (8 résonateurs) est lu en environnement réel à 17 cm de l'antenne. Il contient l'identifiant 00 00 00 00 00 00 00 0, c'est-à-dire l'ensemble de fréquences de résonance doivent être positionnées dans le sous-domaine fréquentiel le plus petit (à l'intérieur de chaque fenêtre de détection). Le spectrogramme moyenné est présenté sur la Figure 7. On observe le code : 00 00 00 00 00 00 01 0. En effet le 7ème pic détecté est positionné sur le deuxième sous domaine ce qui conduit à une erreur de lecture. Le même signal (même spectrogramme) est utilisé avec l'approche revendiquée. Le résultat est donné sur la Figure 8, où les barres horizontales noires correspondent aux fréquences détectées par l'approche basée sur le spectrogramme 2D. On voit qu'elles appartiennent toutes au premier sous domaine de chaque fenêtre conduisant au bon identifiant 00 00 00 00 00 00 00 0.

La possibilité d'extraire, à partir du spectrogramme STFT des tags, les couples fréquence de résonance et facteur de qualité associé, constitue une avancée très importante pour le monde de la RFID sans puce personnalisé.

**Extraction du signal et transformation**

La présente invention est donc caractérisée par une extraction du signal rétrodiffusé en utilisant une transformation temps-fréquence permettant l'établissement d'un spectrogramme correspondant. Toute transformation temps-fréquence permettant l'établissement d'un spectrogramme correspondant pourra avantageusement être utilisée dans le cadre de la présente invention. A titre illustratif, seront cités les transformations de type STFT « transformée de Fourier à court-terme », décomposition de Gabor, et/ou transformée en ondelettes ; dans le cadre de la présente invention c'est la transformée de Fourier à court-terme qui a été privilégiée. Cette dernière est très couramment utilisée, ce qui fait que des codes de calcul optimisés à l'architecture des microprocesseurs des ordinateurs grand public sont disponibles et facilement imprésentables. Il en résulte un temps de calcul le plus souvent significativement réduit, facilitant son utilisation avec des lecteurs mobiles ou avec des capacités de calcul réduites. Cette réduction du temps de calcul pour l'extraction de l'identifiant du tag permet le plus souvent de réduire le temps de lecture d'un tag, élément important là aussi pour des applications industrielles.

On pourra par exemple avantageusement utiliser soit une transformée de Fourier locale continue, soit une transformée de Fourier locale discrète.

Un exemple de transformée de Fourier locale continue est celle décrite dans l'article intitulé « Temporal Separation Detection for Chipless Depolarizing Frequency-coded RFID » (Angle Ramos, Etienne Perret, Olivier Rance, Smail Tedjini, Antonio Lazaro, and David Girbau ; IEEE Transactions on microwave theory and techniques, vol. 64, No. 7, July 2016, page- 2326-2337).

Pour une transformée de Fourier locale discrète, en pratique, c'est celle qu'on programme sur un ordinateur. Elle se calcule en faisant appel à des bibliothèques dédiées de calcul de FFT (fast fourrier transform). La fonction w est le plus souvent une fonction rectangle simple d'une certaine durée T.

A titre illustratif, c'est principalement cette donnée T (durée sur laquelle *w* est non nulle - voire égale à 1 pour le cas de la fonction rectangle) que l'on va définir en fonction de nos tags. Idéalement plus T est grand plus le spectrogramme va être précis en fréquence. A l'inverse si T est bien supérieur à la durée pendant laquelle le tag restitue l'énergie qu'il a emmagasiné, on va augmenter très significativement le bruit dans le signal et donc détériorer le résultat. Ainsi le choix de T est lié au tag et résulte d'un compromis.

**Tag**

Comme déjà expliqué, la présente invention concerne donc aussi un tag RFID sans puce personnalisé pouvant être utilisé dans le procédé de détection et/ou la méthode d'identification revendiqués, le dit tag possédant les caractéristiques suivantes :

- ◦ Un motif conducteur ou un ensemble de motifs conducteur caractérisant sa géométrie, avec de préférence au moins un ou plusieurs ou tous les motifs asymétriques,
- ◦ Caractérisé par son identifiant qui comprend au moins une fréquence de résonance *fr* et, de préférence, au moins un facteur de qualité Q,
- ◦ Résonant dans une bande de fréquences ultra large (ULB) caractérisée par une bande passante supérieure ou égale à 500 MHz, de préférence comprise entre 3,1 et 10,6 GHz,
- ◦ Avec ou sans plan de masse, et
- ◦ De préférence Dépolarisant.

**Tag** - **Géométrie**

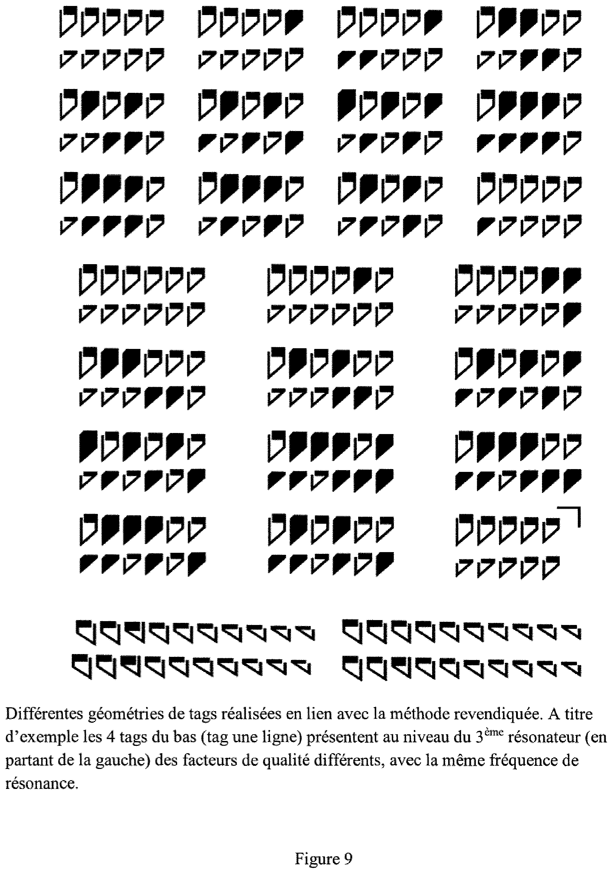

Grâce aux possibilités de codage offertes par la méthode revendiquée, la Demanderesse a également développé toute une gamme de familles de tags nouvelle. Ainsi, dans un mode particulier, un tag sera de préférence composé d'au moins un motif, de préférence au moins deux motifs asymétriques. A titre d'exemple, la Figure 9 montre les tags sans plan de masse réalisés spécifiquement pour la méthode revendiquée. Cette Figure 9 illustre différentes géométries de tags réalisées en lien avec la méthode revendiquée ; à titre d'exemple les 4 tags du bas (tag une ligne) présentent au niveau du 3ème résonateur (en partant de la gauche) des facteurs de qualité différents, avec la même fréquence de résonance.

**Tag** - **Identifiant**

Le tag selon la présente invention sera de préférence caractérisé par un identifiant qui comprend au moins une fréquence de résonance *fr* et au moins un facteur de qualité Q, chacun pouvant être calculé au moyen de la méthode revendiquée. Un avantage des tags selon la présente invention réside dans le fait que des petites modifications de leur géométrie permettent d'obtenir des tags

- A fréquence de résonance discriminante, et/ou
- A facteur de qualité discriminant,

ce qui n'avait jamais été réalisé auparavant.

**Tag Résonant**

Le tag selon la présente invention est donc résonant dans une bande de fréquences ultra large (ULB) caractérisée par une bande passante supérieure ou égale à 500 MHz, de préférence comprise entre 3,1 et 10,6 GHz.

**Tag Passif**

Comme déjà expliqué dans la partie introductive, notre type de dispositif d'identification par fréquence radio sans puce ne nécessite donc ni circuit intégré, ni composants électroniques discrets, tels que par exemple un transistor et/ou une bobine et/ou une capacité et/ou une antenne. Ce type de dispositif est donc caractérisé par un comportement passif car il ne devra pas intégrer de source d'énergie locale (telle qu'une batterie).

Pour rappel, par « dispositif » il faut comprendre un emballage, un document, une étiquette, notamment un document de sécurité ainsi qu'éventuellement tout objet et/ou être vivant sur lequel le marquage de l'identification par RFID sans puce peut être réalisé ou sur lequel un support du marquage peut être rapporté.

**Tag avec ou sans plan de masse**

Le tag selon la présente invention peut être caractérisé en ce qu'il possède ou non un plan de masse. Dans sa plus simple expression, un tag avec plan de masse se définit comme une structure comportant un substrat diélectrique plan d'une épaisseur généralement inférieure à 1mm et supérieure à $10\mu$m pris en sandwich entre deux couches métalliques (d'une épaisseur classiquement comprise entre 50nm jusqu'à $50\mu$m) ; le total des couches (métal - diélectrique - plan de masse) pourra par exemple avoir une épaisseur de 0,1 à 2mm. Le plan de masse correspond à la couche métallique dont la surface correspond totalement à celle du substrat. La seconde couche métallique va-elle être façonnée de manière à présenter une forme géométrique particulière correspondant aux motifs du tag (à l'image de motifs présentés sur la figure 2). Un tag avec plan de masse est donc une structure comportant deux couches métalliques alors que son analogue sans plan de masse va lui comporter une seule couche à savoir celle où le motif du tag est réalisé (à l'image de la Figure 9). Un tag avec plan de masse a l'avantage, une fois positionné côté plan de masse sur un objet, d'isoler d'un point de vue électromagnétique le tag de l'objet. Dans ce cas, l'influence de l'objet sur le tag est moindre par rapport à un tag sans plan de masse. Toutefois, la présence du plan de masse complexifie la fabrication du tag : en plus de présenter une couche métallique (souvent la partie la plus onéreuse du tag du fait du matériau mais aussi de la dimension), il n'est plus possible dans ce cas de figure d'imprimer le tag chipless directement sur l'objet à identifier. En effet dans bon nombre d'applications où l'on va chercher à tracer la vie d'un produit contenu dans un emballage carton, la solution la plus simple et donc la moins onéreuse consiste à imprimer la couche métallique relative au motif du tag (voir Figure 9) directement sur le carton qui va jouer ici le rôle du substrat diélectrique. En contrepartie les performances du tag vont être dégradées dans la mesure où ce substrat ne va pas se comporter aussi bien qu'un substrat ayant été retenu pour ces performances d'un point de vue RF, qui a l'avantage de présenter moins de perte et donc de pouvoir faciliter la lecture du tag.

On note toutefois que dans le cas d'un tag avec plan de masse, une solution basée sur l'utilisation du support carton comme substrat est envisageable à condition de pouvoir imprimer de parte et d'autre du carton les deux couches métalliques qui vont permettre de réaliser un tag chipless. Les principales limitations ici sont 1) d'assurer un bon alignement entre les deux couches métalliques, 2) les pertes du cartons vont dans cette configuration affecter les performances du tag de manière plus notable que pour le cas sans plan de masse, dans le mesure où la structure avec plan de masse va d'avantage concentrer le champ entre les deux couches métalliques, à savoir au niveau du substrat carton (forcément avec des pertes, contrairement à l'air qui peut être considéré comme un matériaux sans perte).

La présente invention s'applique donc de manière avantageuse aussi bien aux tags sans plan de masse qu'avec plan de masse.

**Tag dépolarisant**

Le tag selon la présente invention sera de préférence caractérisé par le fait qu'il est dépolarisant. Un tag dépolarisant est un tag capable d'émettre une onde avec une polarisation orientée perpendiculairement à celle incidente (on parle alors de réflexion en polarisation croisée ou cross polarisation en anglais).

**Lecteur**

A titre illustratif, dans le cadre de la présente invention, le lecteur est un lecteur émetteur-récepteur d'ondes électromagnétiques ; le principe de fonctionnement du dit lecteur repose sur l'émission d'un signal électromagnétique en direction du dispositif d'identification (par exemple l'étiquette) qui va réfléchir le dit signal en fonction de sa géométrie (et par exemple de ses caractéristiques de résonances propres) et sur la capture par le lecteur du dit signal réfléchi - ainsi, le traitement du signal reçu (notamment à travers une étape de décodage) permettra de remonter à l'information contenue dans le dispositif (par exemple, l'étiquette / le tag).

Ainsi, de manière générale, les dispositifs d'identification par fréquence radio sans puce selon la présente invention font partie d'un système RFID qui comprend également un ou plusieurs lecteurs RFID qui sont eux-mêmes connectés on non à des ordinateurs de supervision ou à une carte électronique qui réalise un traitement qui peuvent par exemple faire le lien avec des bases de données existantes. Ces lecteurs permettent donc d'identifier des objets grâce aux tags RFID qui y sont apposés, les dits tags RFID sans puce étant assimilables à une cible radar statique avec une signature électromagnétique spécifique. Ainsi, dans un mode d'exécution particulier de la présente invention, les lecteurs RFID sans puce sont donc assimilables à un radar en termes de fonctionnement, par exemple un radar aérien détectant la signature des avions à un rapport d'échelle et de puissance près. A titre illustratif, les tags RFID sans puce peuvent être vus comme des cibles radar possédant une signature temporelle ou fréquentielle particulière. Tout type de radar approprié à la réception/identification du signal retro-émis par le tag RFID pourra avantageusement être utilisé dans le cadre de l'invention ; à titre illustratif et non limitatif, nous citerons le radar impulsionnel.

Les capacités de codage obtenues au moyen des dispositifs d'identification par fréquence radio sans puce selon la présente invention répondent aux nonnes en vigueur car les étiquettes obtenues permettent d'avoir au moins 40 bits d'informations ce qui correspond au codes à barre de type EAN13. A titre illustratif, des valeurs de plus de 40 bits pour un format de carte de crédit [soit 40 / (85,60 $\times$ 53,98 mm)= 40 /46 bits/cm$^2$] ont été obtenues ; ainsi, dans un mode d'exécution particulier selon la présente invention, les dispositifs revendiqués sont caractérisés par une valeur de capacité de codage supérieure à 0,85 bits/cm$^2$, par exemple supérieure à 1 bits/cm$^2$, supérieure à 2 bits/cm$^2$, voire supérieure à 5 bits/cm$^2$.

Dans une variante de réalisation de la présente invention, le substrat sur lequel le tag sera apposé (de préférence imprimé) peut être sélectionné parmi un grand nombre de matière et ne pas être considéré comme limité aux matières fréquemment utilisées dans les dispositifs standards d'impression et/ou de personnalisation tels que les substrats papier, carton et plastique. On citera à titre d'exemples non limitatifs le métal, le papier, le tissu non tissé, le plastique, par exemple une résine copolymère méthacrylique, du polyester, du polycarbonate, du polyéthylène, du polypropylène, et/ou du chlorure de polyvinyle, ou même les matériaux de type cellulosique tels que, par exemple, le bois, le contreplaqué ou les matériaux cristallins tels que le verre ou les céramique, par exemple les matériaux complexes comprenant un ou plusieurs de ces composants comme par exemple les briques de lait.

Selon la présente invention, le substrat (feuille, carte, etc.) se présente généralement sous une forme rectangulaire ou carrée. Cette feuille se déplace, en général grâce à un système de transport de substrats dans une machine d'impression, le long d'un chemin de transport orienté selon un axe longitudinal depuis au moins un magasin d'entrée fournissant les substrats imprimables et/ou personnalisables, jusqu'à au moins un magasin de sortie recevant les substrats imprimés et/ou personnalisés, et donc recouverts des traces de matière conductrice conformément à la présente invention. Les « bords latéraux » du substrat sont les deux bords situés de part et d'autre de cet axe longitudinal; les bords avant et/ou arrière sont ses bords transversaux. Le substrat peut également se présenter sous la forme de bobine dans une machine de type bobine-bobine.

La présente demande décrit diverses caractéristiques techniques et avantages en référence aux Figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Procédé de détection d'étiquette d'identification par fréquence radio « tag RFID » sans puce personnalisé **caractérisé en ce que** le procédé de détection comprend

   - la communication entre un lecteur et le tag RFID dans une bande de fréquences ultra large ULB de bande passante supérieure ou égale à 500 MHz,
   - la communication comprenant l'émission d'un signal par le lecteur vers le tag RFID et la rétrodiffusion d'un signal par le tag RFID, et
   - l'identification du tag RFID par extraction du signal rétrodiffusé en utilisant une transformation temps-fréquence comprenant l'établissement de spectrogramme temps-fréquence, la dite identification étant **caractérisée en ce qu'**elle ne comprend pas d'étape de calcul de moyenne du spectrogramme temps-fréquence.

2. Procédé de détection d'étiquette d'identification par fréquence radio sans puce personnalisé selon la revendication 1 dans lequel l'identification du tag RFID comprend la reconnaissance des formes 2D présentes sur le spectrogramme temps-fréquence, les dites formes étant l'expression des résonances des résonateurs du tag RFID.

3. Procédé de détection d'étiquette d'identification par fréquence radio sans puce personnalisé selon l'une quelconques des revendications précédentes dans lequel la bande passante est comprise entre 3,1 et 10,6 GHz.

4. Procédé de détection d'étiquette d'identification par fréquence radio sans puce personnalisé selon l'une quelconques des revendications précédentes dans lequel le lecteur est un lecteur émetteur-récepteur d'ondes électromagnétiques.

5. Procédé de détection d'étiquette d'identification par fréquence radio sans puce personnalisé selon la revendication 4 dans lequel le lecteur est un radar impulsionnel.

6. Procédé de détection d'étiquette d'identification par fréquence radio sans puce personnalisé selon l'une quelconques des revendications précédentes dans lequel la transformation temps-fréquence est une transformation STFT « short-time Fourier transform », le spectrogramme temps-fréquence est un spectrogramme STFT et l'identification ne comprend pas d'étape de calcul de moyenne du spectrogramme STFT.

7. Procédé de détection d'étiquette d'identification par fréquence radio sans puce personnalisé selon l'une quelconques des revendications précédentes dans lequel l'identification du tag RFID comprend la reconnaissance de sa/ses fréquences de résonance.

8. Procédé de détection d'étiquette d'identification par fréquence radio sans puce personnalisé selon l'une quelconques des revendications précédentes dans lequel l'identification du tag RFID comprend la reconnaissance de son/ses facteurs de qualité.

9. Procédé de détection d'étiquette d'identification par fréquence radio sans puce personnalisé selon la revendication 8 dans lequel un facteur de qualité est associé à chaque fréquence de résonance de la revendication 7.

10. Utilisation de tag RFID sans puce personnalisé dans un procédé de détection selon l'une quelconques des revendications précédentes **caractérisé en ce que** l'utilisation permet la discrimination de deux tag RFIDs successifs au moyen de leurs valeurs de fréquence de résonance et/ou de facteur de qualité.

11. Utilisation de tag RFID sans puce personnalisé dans un procédé de détection selon la revendication 10 dans laquelle **caractérisé en ce que** l'utilisation permet la discrimination de deux tag RFIDs successifs au moyen de leur couple de valeurs fréquence de résonance et facteur de qualité.

12. Utilisation de tag RFID sans puce personnalisé selon l'une quelconques des revendications 10 à 11 dans lesquelles le tag RFID est un motif conducteur ou un ensemble de motifs conducteurs caractérisant sa géométrie avec au moins un motif asymétrique.

**13.** Utilisation de tag RFID sans puce personnalisé selon la revendication 12 dans laquelle tous les motifs du tag RFID sont asymétriques.

**14.** Utilisation de tag RFID sans puce personnalisé selon l'une quelconques des revendications 10 à 13 dans laquelle le tag RFID ne possède pas de plan de masse.

**15.** Utilisation de tag RFID sans puce personnalisé selon l'une quelconques des revendications 10 à 14 dans laquelle le tag RFID est dépolarisant.

Spectrogramme d'une réponse d'un tag comportant 8 résonateurs.

Figure 1

Tag comportant 8 résonateurs

dont le spectrogramme obtenu après mesure est donné sur la Figure 1

Figure 2

**Résultat de l'algorithme de décodage**
**Code : 00000000**

Spectrogramme moyenné selon l'axe temporel selon l'approche introduite dans l'article de Ramos précité.

Figure 3

Spectrogramme calculé par partir de l'équation (1) avec f0=1GHz et Q=15.

Figure 4

Résultat de la corrélation 2D effectué entre les résultats présentés sur la Figure 1 et la Figure 4. Les traits gris clair représentent les maximums en fréquence pour chaque position temporelle. Les traits gris clair représentent les maximums en fréquence pour chaque position temporelle. Ces 8 traits correspondent aux 8 fréquences de résonances du tag dont le spectrogramme mesuré est présenté figure 1. Ces fréquences sont numérotées $fri$ avec $i$=1 jusqu'à $i$=8.

Figure 5

Figure 6. (a) Spectrogramme issu d'une mesure d'un tag en configuration réelle d'utilisation. (b) Tag utilisé pour la mesure. (c) Signal moyenné en temps calculé sur l'intervalle Tavg, (d) évolution du signal pour $f=f_r1$ (première fréquence de résonance) en fonction du temps, (e) évolution du signal pour f=4,05GHz (fréquence autre qu'une fréquence de résonance du tag) en fonction du temps.

Figure 6

**Résultat de l'algorithme de décodage**
**Code : 00000010**

Spectrogramme moyenné issu d'une mesure d'un tag en environnement réel (le tag que question est donné en haut à droite de la Figure).

Figure 7

Spectrogramme issu d'une mesure d'un tag en environnement réel (le tag mesuré est présenté Figure 2).

Figure 8

Différentes géométries de tags réalisées en lien avec la méthode revendiquée. A titre d'exemple les 4 tags du bas (tag une ligne) présentent au niveau du $3^{\text{ème}}$ résonateur (en partant de la gauche) des facteurs de qualité différents, avec la même fréquence de résonance.

Figure 9

Europäisches Patentamt
European Patent Office
Office européen des brevets

**RAPPORT DE RECHERCHE EUROPEENNE**

Numéro de la demande
EP 19 30 5301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RUBAYET-E-AZIM ET AL: "Short Time Fourier Transform (STFT) for collision detection in chipless RFID systems", 2015 INTERNATIONAL SYMPOSIUM ON ANTENNAS AND PROPAGATION (ISAP), THE INSTITUTE OF ELECTRONICS, INFORMATION AND COMM, 9 novembre 2015 (2015-11-09), pages 1-4, XP032888849, [extrait le 2016-04-04] | 1-11 | INV. H04B5/00 H01Q21/24 G06K19/067 G01S13/88 |
| Y | * Titre, Chapitre I-VI * * figures 4, 6 * * tableau I * ----- | 12-15 | |
| Y | ARNAUD VENA ET AL: "A Depolarizing Chipless RFID Tag for Robust Detection and Its FCC Compliant UWB Reading System", IEEE TRANSACTIONS ON MICROWAVE THEORY AND TECHNIQUES, PLENUM, USA, vol. 61, no. 8, 1 août 2013 (2013-08-01), pages 2982-2994, XP011522354, ISSN: 0018-9480, DOI: 10.1109/TMTT.2013.2267748 | 12-15 | |
| A | * Chapitre I-II * * figures 2a, 2b * ----- | 1-11 | DOMAINES TECHNIQUES RECHERCHES (IPC) H04B H01Q H01P G06K G01S |
| Y | BALBIN I ET AL: "Phase-Encoded Chipless RFID Transponder for Large-Scale Low-Cost Applications", IEEE MICROWAVE AND WIRELESS COMPONENTS LETTERS, IEEE SERVICE CENTER, NEW YORK, NY, US, vol. 19, no. 8, 1 août 2009 (2009-08-01), pages 509-511, XP011347595, ISSN: 1531-1309, DOI: 10.1109/LMWC.2009.2024840 | 12,13 | |
| A | * Résumé, Chapitre IV * * figure 4 * ----- -/-- | 1-11,14, 15 | |

Le présent rapport a été établi pour toutes les revendications

| Lieu de la recherche | Date d'achèvement de la recherche | Examinateur |
|---|---|---|
| Munich | 24 juillet 2019 | Franz, Stefan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 30 5301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | RAMOS ANGEL ET AL: "Temporal Separation Detection for Chipless Depolarizing Frequency-Coded RFID", IEEE TRANSACTIONS ON MICROWAVE THEORY AND TECHNIQUES, PLENUM, USA, vol. 64, no. 7, 1 juillet 2016 (2016-07-01), pages 2326-2337, XP011616178, ISSN: 0018-9480, DOI: 10.1109/TMTT.2016.2568180 [extrait le 2016-07-07] * le document en entier * ----- | 1-15 | |

| DOMAINES TECHNIQUES RECHERCHES (IPC) |
|---|
| |

Le présent rapport a été établi pour toutes les revendications

| Lieu de la recherche | Date d'achèvement de la recherche | Examinateur |
|---|---|---|
| Munich | 24 juillet 2019 | Franz, Stefan |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ANGLE RAMOS ; ETIENNE PERRET ; OLIVIER RANCE ; SMAIL TEDJINI ; ANTONIO LAZARO ; DAVID GIRBAU.** Temporal Separation Detection for Chipless Depolarizing Frequency-coded RFID. *IEEE Transactions on microwave theory and techniques,* Juillet 2016, vol. 64 (7), 2326-2337

- **VENA ; ARNAUD ; ETIENNE PERRET ; SMAIL TEDJINI.** Chipless RFID tag using hybrid coding technique. *IEEE Transactions on Microwave Theory and Techniques,* 2011, vol. 59.12, 3356